Europäisches Patentamt

(19) European Patent Office

Office européen des brevets

(11) Numéro de publication: **0 217 685**
**B1**

(12) **FASCICULE DE BREVET EUROPEEN**

(45) Date de publication du fascicule du brevet: **04.04.90**

(21) Numéro de dépôt: **86401675.3**

(22) Date de dépôt: **28.07.86**

(51) Int. Cl.⁵: **B 23 K 35/00, B 32 B 15/01**

(54) **Panneau renforcé, son procédé de fabrication et appareil pour la mise en oeuvre de ce procédé.**

(30) Priorité: **05.08.85 FR 8511959**
**19.02.86 FR 8602245**

(43) Date de publication de la demande:
**08.04.87 Bulletin 87/15**

(45) Mention de la délivrance du brevet:
**04.04.90 Bulletin 90/14**

(84) Etats contractants désignés:
**AT BE CH DE GB IT LI LU NL SE**

(56) Documents cités:
**DE-A-3 401 670**
**FR-A-1 044 517**
**GB-A-1 046 798**
**US-A-2 188 721**
**US-A-2 530 552**
**US-A-2 694 852**
**US-A-3 620 880**

(73) Titulaire: **VIEILLE MONTAGNE FRANCE S.A. "Les Mercuriales"**
**40, Rue Jean Jaurès**
**F-93176 Bagnolet (FR)**

(72) Inventeur: **Potet, Henri-Jacques**
**9, Route de la Faisanderie**
**F-78110 Le Vésinet (FR)**
Inventeur: **Vacher, Jean-Claude**
**Résidence République Rue Serval**
**F-59500 Souai (FR)**

(74) Mandataire: **Hirsch, Marc-Roger**
**Cabinet Hirsch 34 rue de Bassano**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention se rapporte à un panneau composé constitué d'au moins une tôle métallisée sur au moins une face par un métal ou alliage métallique de revêtement différent de celui de la tôle et soudée sur une face à un treillis qui est métallisé et soudé par son revêtement de métallisation au revêtement en métal ou alliage métallique de la face métallisée de la tôle. Elle vise aussi le procédé de fabrication d'un tel panneau et un appareil pour la mise en oeuvre de ce procédé permettant la protection du panneau contre la corrosion.

On connaît déjà des panneaux sandwichs constitués de deux tôles, soit en métal revêtu de zinc (tôle galvanisée ou électrozinguée), soit en aluminium ou autres métaux ou alliages de protection, emprisonnant entre elles un treillis servant de liaison, ainsi que des panneaux renforcés constitués d'une seule tôle et d'un treillis ou d'une succession de tôles et de treillis empilés. De tels panneaux conviennent particulièrement pour les constructions métalliques devant absorber des vibrations ou des déformations et présenter une inertie et une capacité d'amortissement importantes (panneaux pour caisse, pour portes, pour capots d'automobile par exemple) ainsi qu'une très grande résistance à la corrosion.

Dans la réalisation de ces panneaux, on rencontre une difficulté pour la liaison de la ou des tôles et du treillis. Une solution adoptée consiste à coller la tôle sur le treillis. Elle présente cependant un inconvénient majeur: le film de colle présente une résistance électrique et/ou thermique important lors de la soudure, notamment électrique, des panneaux entre eux ou à un organe à raccorder et de plus, le procédé de collage ne garantit pas le persistance de l'adhérence dans le temps entre le treillis et le panneau.

GB—A—795 844 décrit un procédé de fabrication d'une bande de tôle composite constituée d'une bande centrale en acier au carbone recouverte par soudure de colaminage, sur chaque face d'une bade d'acier inoxydable.

US—A—2 530 552 décrit un procédé de soudure d'une plaque de tôle à un bloc massif en intercalant un treillis étamé.

GB—A—1 046 798 a pour objet un procédé de fabrication par colaminage d'une bande de tôle composite comportant deux ou trois couches de tôle en divers matériaux, notamment acier inoxydable et acier doux, chaque tôle étant métallisée à l'aluminium.

Aucun de ces documents ne décrit un procédé permettant d'obtenir de façon économique et à grand débit un panneau renforcé par un treillis et présentant simultanément une grande capacité d'amortissement et une résistance élevée à la corosion.

La présente invention a pour objet de remédier à ces insuffisances et de proposer des panneaux renforcés aisément soudables par soudure électrique les uns aux autres et qui présentent une résistance élevée à la décohésion, notamment dans le temps.

Le panneau renforcé selon l'invention est caractérisé en ce que l'un des éléments, tôle ou treillis, constituant le panneau est métallisé au zinc ou ses alliages tandis que l'autre est métallisé à l'aluminium ou ses alliages. Le treillis et la tôle peuvent être métallisés sur toute leur surface et, selon un mode de réalisation qui s'est révélé très avantageux de façon imprévisible, le tôle est métallisée au zinc ou ses alliages tandis que le treillis est métallisé à l'aluminium ou ses alliages, au moins sur sa surface la plus extérieure.

Le panneau renforcé peut être constitué de deux tôles métallisées au zinc ou ses alliages sur toute la surface en regard du treillis et emprisonnant entre elles le treillis métallisé à l'aluminium ou ses alliages sur toute sa surface pour constituer un panneau sandwich.

La présente invention a également pour objet un procédé de fabrication d'un panneau renforcé composé constitué d'au moins une tôle métallisée sur au moins une face par un métal ou alliage métallique de revêtement et soudée sur une face à un treillis qui est métallisé et soudé par son revêtement de métallisation au revêtement en métal de la face métallisé de la tôle, l'un des éléments tôle ou treillis constituant le panneau étant métallisé au zinc où à ses alliages tandis que l'autre est métallisé à l'aluminium où à ses alliages, procédé dans lequel au moins une bande ou plaque de tôle métallisée sur au moins une face et une bande ou plaque de treillis préablement revêtue d'un matériau apte à la soudure sont chauffés et ensuite l'ensemble formé de la tôle et du treillis superposés par leurs faces métallisées en contact sont comprimés pour réaliser une soudure par pression de la tôle et du treillis, caractérisé en ce qu'avant compression dudit ensemble, la bande ou plaque de tôle est portée à une première température inférieure à la température de fusion ou de dégradation de son revêtement de métallisation, en ce qu'un treillis en bande ou en plaque est préablement revêtu d'un matériau apte à la soudure et porté à une deuxième température déterminée maintenant ce matériau apte à la soudure à l'état liquide, de façon à assurer la soudure du treillis à la tôle par diffusion du revêtement du treillis dans le revêtement de la tôle et par absorption par la tôle et son revêtement de métallisation de l'énergie theremique de solidification du revêtement liquide du treillis et en ce que l'on refroidit l'ensemble de la tôle et du treillis immédiatement après leur sortie de la phase de compression jusqu'à une troisième température pour laquelle la soudure est durcie.

Selon un autre mode de réalisation du procédé, on utilise une tôle métallisée au zinc ou ses alliages, de préférence par électrozingage, tandis que l'on utilise pour le treillis un matériau métallique de soudure en aluminium ou alliage d'aluminium. Pour obtenir un meilleur accrochage du matériau de soudure, on peut utiliser un treillis qui a été préalablement métallisé, notamment par un autre métal que celui du matériau de soudure, tel que par exemple du zinc.

Selon un autre mode de réalisation du procédé, on place au contact de la face métallisée d'au moins une plaque de tôle préalablement chauffée à la première température $T_2$, une plaque de treillis préalablement trempée dans un bain de matériau de soudure liquide, tel qu'un métal ou alliage métallique porté à la deuxième température déterminée $T_2$, de manière à charger ce treillis de matériau métallique de revêtement et à le chauffer à une température de soudure et on comprime ensuite par compression à plat, par exemple au moyen d'une presse, l'ensemble ainsi formé, de façon à assurer la soudure de treillis à la tôle.

Selon une autre forme de réalisation du procédé, on amène sous atmosphère inerte au contact d'au moins une bande ou plaque de tôle métallisée, préalablement chauffée à la première température $T_1$, le treillis préalablement trempé dans un bain du matériau de soudure liquide porté à la deuxième température déterminée $T_2$, de manière à charger ce treillis de matériau métallique de revêtement et à le chauffer à une température de soudure et on comprime ensuite par colaminage l'ensemble ainsi formé. De préférence, on élimine par soufflage de gaz inerte, tel que de l'azote, le matériau de soudure restant liquide et en excès sur le treillis sortant du bain, tout en maintenant à l'état liquide le revêtement residuel du treillis en matériau de soudure.

Les bandes de tôles peuvent recevoir préalablement un traitement de surface ménageant l'intégrité de leur revêtement de métallisation et le treillis reçoit, avant de passer dans un bain de soudure liquide, un traitement de surface adéquat.

L'invention a également pour objet un appareil pour la mise en oeuvre du procédé de fabrication de panneaux renforcés et comprenant au moins une bobine délivrant une bande de tôle métallisée et une paire de cylindres de colaminage ou de calendrage ou de serrage entre lesquels est engagée la bande de tôle associée à un treillis, caractérisé en ce qu'il comporte des moyens de traitement de surface de la tôle et de chauffage à la première température de la bande quittant la bobine, l'appareil comprenant en outre une débobineuse de treillis où celui-ci est guidé par des rouleaux pour plonger dans un bain de matériau liquide apte à la soudure tel qu'un métal ou un alliage métallique, maintenu à la deuxième température déterminée et est engagé à sa sortie du bain au contact de la bande de tôle dans les cylindres pour en sortir selon un trajet vertical ascendant et en ce qu'il comporte un organe refroidisseur rapide apte à refroidir, immédiatement après sa sortie des cylindres jusqu'à une troisième température pour laquelle la soudure est durcie, le panneau formé par compression et soudure du treillis au contact de la tôle.

L'organe refroidisseur rapide est de préférence constitué par des buses de soufflage d'air frais en direction de l'intervalle entre les cylindres et de chaque côté du panneau renforcé sortant de l'intervalle entre ces cylindres.

Le treillis est avantageusement entouré, entre sa sortie du bain et son entrée dans les cylindres, par un manchon dans lequel règne une atmosphère gazeuse inerte et où agissent des moyens de soufflage et des moyens de maintien en température.

D'autres caractéristiques, buts et avantages de l'invention apparaîtront à la lecture de la description suivante d'un mode de réalisation, en référence au dessin annexé dans lequel:

la figure 1 représente schématiquement un appareil pour la mise en oeuvre du procédé et la réalisation du panneau renforcé selon l'invention;

la figure 2 est une coupe schématiquement et fragmentaire d'un panneau renforcé selon l'invention réalisé à l'aide de l'appareil représenté à la figure 1;

la figure 3 représente schématiquement un appareil selon l'invention pour la réalisation de panneaux sandwich;

la figure 4 est une coupe fragmentaire du panneau sandwich selon l'invention réalise à l'aide de l'appareil représenté à la figure 3.

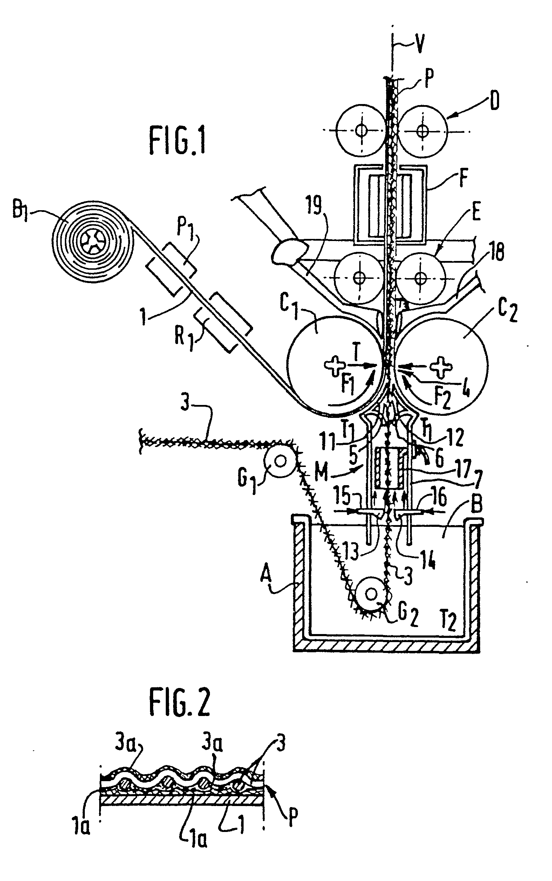

L'appareil selon l'invention, dans la forme de réalisation représentée à la figure 1, comporte d'un côté d'un plan vertical V une bobine $B_1$ à axe horizontal et sur laquelle est enroulée, sous forme de bande, une tôle 1 destinée à constituer la face plane du panneau renforcé selon l'invention. Cette tôle est métallisée avec un métal ou un alliage de revêtement, tel que du zinc, par galvanisation ou électrozingage ou, dans certaines applications, avec de l'aluminium, sur au moins la face qui vient en contact avec un treillis de renforcement.

A la bobine $B_1$ est associé un bloc $P_1$ destiné à assurer de manière connue une préparation mécanique et/ou chimique de la surface de la bande de tôle, et une unité de réchauffage $R_1$ pour amener la température de cette bande à une valeur déterminée $T_1$, normalement inférieure à la température de fusion ou de dégradation du revêtement de métallisation de la tôle. Pour une tôle galvanisée, c'est-à-dire métallisée au zinc dont le point de fusion est d'environ 420°C, la température $T_1$ est par exemple de l'ordre de 300°C.

La bande de tôle 1, déroulée de la bobine $B_1$ par des moyens non représentés, après avoir respectivement traversé les unités de traitement de surface et de réchauffage $P_1$ et $R_1$, est introduite entre deux cylindres de compression $C_1$ et $C_2$, disposés de part et d'autre du plan central vertical V, selon un parcours vertical ascendant dans ledit plan V. Au moins la face de la tôle située en face du treillis entre les cylindres est métallisée.

Des moyens connus en soi, non représentés, assurent l'entraînement des cylindres $C_1$ et $C_2$ en sens contraire, selon les flèches $F_1$ et $F_2$; d'autres moyens tendent à rapprocher l'un de l'autre ces cylindres afin de maintenir entre eux pression sensiblement constante T qui selon les applications peut provoquer un véritable laminage de la tôle et surtout du treillis par diminution de section mais plus généralement un calendrage, c'est-à-dire un dressage ou un simple serrage.

A partir d'une débobineuse non représentée, un treillis métallique 3 constitué par exemple de fils métalliques tissés et qui est destiné à constituer le renforcement ou l'âme du panneau (cas d'un panneau sandwich), est guidé par des rouleaux de guidage $G_1$ et $G_2$ et subit un traitement de surface adéquat. Le treillis 3 plonge dans un bain B de matériau métallique liquide ou de matériau de soudure liquide, tel que du zinc, de l'étain, de l'aluminium, du plomb, du cadmium, ou un alliage liquide tel qu'un alliage aluminium-cuivre ou aluminium-silicium, dans lequel il est réchauffé à une température $T_2$ qui est sensiblement celle du bain B contenu dans une enceinte calorifugée A à l'aplomb du plan V. A titre d'exemple, dans le cas où le treillis 3 est plongé dans un bain d'aluminium, la température de ce bain est d'environ 700°C.

Le treillis 3 sort du bain B selon un parcours vertical ascendant dans le plan V et est engagé dans l'intervalle entre le cylindres $C_1$ et $C_2$ au contact de la tôle 1, au cours de son passage ente les cylindres $C_1$ et $C_2$ dans une zone 4 de colaminage ou plus généralement de serrage, produisant une compression par serrage T et la soudure du métal de revêtement 3a de ce treillis 3 au métal de revêtement 1a de la tôle 1 et, par voie de conséquence, la soudure du treillis 3 à la tôle 1.

Dans son parcours entre le bain B et les cylindres $C_1$ et $C_2$, le treillis 3 est entouré par un manchon M, dont l'enveloppe étanche 7 plonge dans le bain B et épouse, par deux lèvres supérieurs 11 et 12, le contour inférieur des cylindres $C_1$ et $C_2$ pour constituer de chaque côté du treillis 3 un ajutage 5 ou 6 en forme de fente dirigée vers la zone de compression 4.

Dans le manchon M, au-dessus du bain, sont disposées des buses 13, 14, tounrées chacune vers une face distincte du treillis et reliées par une canalisation 15, 16 à une source de gaz inerte sous pression telle que de l'azote. Les jets de gaz inerte s'échappant de ces buses ont pour fonction de chasser l'excès de matériau de revêtement liquide entraîné par le treillis 3, sans provoquer d'oxydation du métal liquide. A l'intérieur du manchon M règne une atmosphère gazeuse inerte et une température contrôlée qui peut étre régulée par des plaques de réchauffage électrique 17. Il faut dans ce cas régler les paramètres de fonctionnement: soufflage, température $T_1$, vitesse de défilement pour que le revêtement du treillis reste liquide et à une température adaptée après le soufflage. Le treillis 3 est entraîne au contact de la tôle 1 dans la zone de serrage 4 des cylindres $C_1$ et $C_2$. Sous l'effet de la compression et, le cas échéant, du colaminage, il y a contact intime du treillis 3 et de la tôle 1 par l'intermédiaire de leur revêtement métallique respectif et soudure par diffusion du revêtement métallique. La soudure est réalisée en continu du fait de l'absorption initiale par le revêtement métallique 1a de la tôle 1 (voir la figure 2) de la chaleur de solidification du revêtement liquide 3a du treillis, ce qui soude les deux revêtements entre eux, puis du transfert de cette chaleur à la tôle 1 elle-même.

La tôle 1 et le treillis 3 sont ainsi instantanément solidarisés par soudure. Pour éviter une désolidarisation locale éventuelle entre le treillis 3 et la tôle 1, immédiatement après la sortie de la zone ou intervalle de serrage 4 entre les cylindres $C_1$ et $C_2$, l'ensemble constitué de la tôle 1 soudée au treillis 3 peut subir un refroidissement supplémentaire rapide par des buses de soufflage 18 et 19 (par exemple de soufflage d'air frais), à une température $T_3$ pour laquelle la soudure est durcie. Dans le cas où le matériau de soudure liquide est par exemple du zinc, le refroidissement rapide doit porter la soudure à une température nettement inférieure au point de fusion du zinc, c'est-à-dire au moins inférieure à 300°C.

L'une des combinaisons qui s'est révélée de façon imprévisible la plus favorable expérimentalement a consisté à utiliser des tôles 1 métallisées au zinc par électrozingage et un treillis, de préférence prémétallisé (notamment au zinc) pour obtenir un meilleur accrochage du métal liquide, immergé dans un bain B d'aluminium en fusion. L'aluminium qui présente une chaleur de fusion élevée, cède dans la zone de colaminage ou de serrage 4 une quantité de chaleur importante qui facilite la soudure par diffusion du métal de métallisation 1a de la tôle 1 dans le métal de revêtement 3a du treillis 3.

L'ensemble ainsi constitué, formant la panneau P de la figure 2 à l'aide d'un treillis métallique 3 à double épaisseur de film plaqué sur la tôle métallisée 1 à laquelle il est soudé par l'intermédiaire des couches de revêtement 1a et 3a respectivement de la tôle métallisée 1 et du treillis 3 après son passage dans le bain B, est entraîné par des paires de galets d'extraction E, ce qui assure le déroulement des bobines de tôle et de treillis avec une bonne synchronisation, et traverse une chambre de refrodissement final F avant de passer entre des galets de dressage D et d'être conditionné pour l'emploi.

En ce qui concerne les conditions de mise en oeuvre du procédé, on notera que le traitement de surface des tôle 1 et 2 après débobinage, a pour objet de mettre la surface métallisée de ces tôles dans les conditions de propreté nécessaires à une bonne diffusion, complétées par un préchauffage à la température $T_1$. Cette température $T_1$, si elle doit permettre une bonne soudure, ne doit cependant pas entraîner la mise à l'état liquide du métal du revêtement constitué généralement par du zinc, ni la migration du fer de la tôle dans le métal du revêtement, ce qui pourrait gâter la soudure ultérieure par migration du fer dans le zinc et formation de composé zinc-fer par exemple.

Pour le treillis, la température de réchauffage $T_2$ est fonction du matériau de soudure métallique liquide formant le bain B. Ce matériau doit être capable de diffuser facilement dans le métal du revêtement de la tôle 1 pour réaliser la soudure, mais à une température évitant la migration du fer dans le revêtement et dans la soudure. Celle-ci, dans ce cas, deviendrait défectueuse par modification de la cinétique de diffusion.

Dans un panneau ainsi réalisé, on obtient une liaison intime et résistante entre le treillis et les tôles; l'obstacle rencontré dans les panneaux usuels lors de la soudure électrique de ces panneaux, est ainsi levé et les panneaux renforcés conservent toutes leurs qualités intrinsèques d'amortissement et de résistance mécanique ainsi qu'une excellente résistance à la corrosion sur les faces protégées par métallisation.

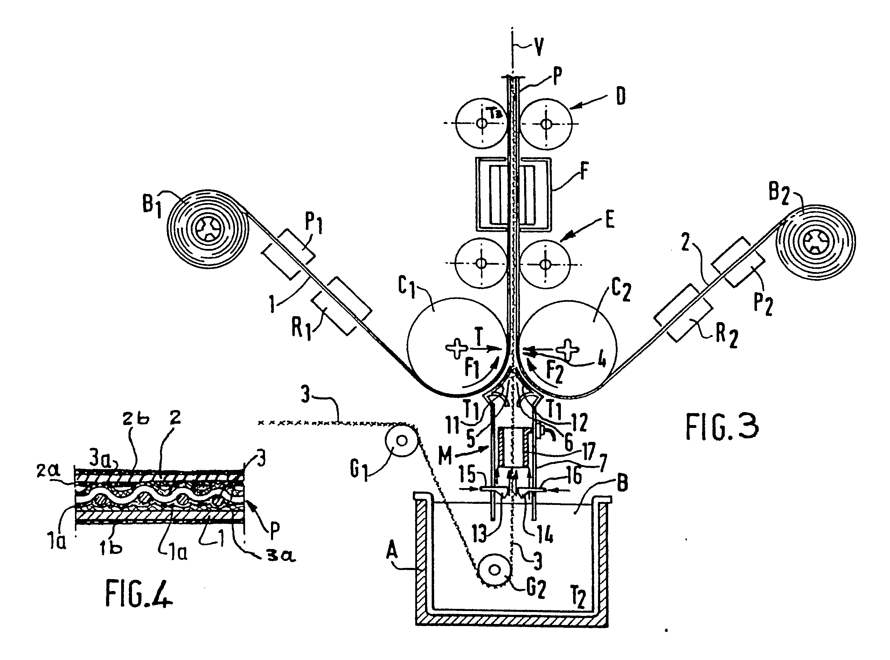

L'appareil selon l'invention, dans la forme de réalisation de la figure 3 et destiné à la réalisation de panneaux sandwich reprend les mêmes repères de référence que ceux de la figure 1 sur les éléments déjà représentés sur cette figure et pour lesquels il ne sera pas donné d'explications complémentaires.

Cet appareil comporte symétriquement de part et d'autre d'un plan vertical V, deux bobines $B_1$ et $B_2$ d'axes horizontaux, sur lesquelles sont enroulées, sous forme de bandes, les tôles 1 et 2 destinées à constituer les faces extérieures du panneau selon l'invention. Ces tôles sont métallisées avec un métal ou un alliage de revêtement tel que du zinc par galvanisation ou électrozingage ou dans certaines applications avec de l'aluminium sur au moins la face qui vient en contact avec le treillis.

A chacune des bobines $B_1$, $B_2$, est associé respectivement un bloc, $P_1$, $P_2$ destiné à assurer de manière connue une préparation mécanique et/ou chimique de la surface de la bande de tôle, et une unité de réchauffage, $R_1$ et $R_2$, pour amener la température de cette bande à la valeur déterminée, $T_1$.

Les deux bandes de tôle 1 et 2, déroulées des bobines $B_1$ et $B_2$ par des moyens non représentés, après avoir respectivement traversé les unités de traitement de surface et de réchauffage $P_1$ et $R_1$, $P_2$ et $R_2$ respectivement, sont plaquées sur deux cylindres de compression $C_1$ et $C_2$, disposés de part et d'autre d'un plan central vertical V et entre lesquels sont engagées lesdites bandes 1 et 2, selon un parcours vertical ascendant, dans ledit plan V, au moins les faces vis-à-vis étant métallisées.

Le treillis 3 traité comme dans le cas de la figure 1, est entraîné entre les tôles 1 et 2 dans les cylindres $C_1$ et $C_2$. Sous l'effet de la compression et du colaminage, il y a contact intime du treillis 3 et des tôles 1 et 2, et soudure par diffusion. L'ensemble ainsi constitué, forme le panneau P représenté en coupe fragmentaire à la figure 4 est constitué d'un treillis métallique 3 à double épaisseur de fil serré entre deux tôles métallisées 1 et 2, le revêtement de métallisation 3a en matériau de soudure du treillis 3 étant soudé aux revêtements de métallisation 1a et 2a des tôles 1 et 2, qui présentent par ailleurs sur leurs surfaces extérieures les revêtements de métallisation 1b et 2b. Dans l'appareil de 1a figure 3, les tôles 1 et 2 présentant une masse de refroidissement plus importante par rapport au treillis 3, les buses de soufflage d'air frais 18 et 19 de la figure 1 peuvent être omises.

L'invention peut s'appliquer mutatis mutandis à la structure et à la fabrication des panneaux sandwichs selon les figures 3 et 4, les solutions étant décrites en regard les figures 1 et 2. Dans ce cas, la bande de panneau sandwich peut être traitée de la même façon que le panneau renforcé, c'est-à-dire avec un refroidissement rapide immédiatement après la sortie de la zone de colaminage 4 où, si les tôles ne sont pas laminées à proprement parler, les surfaces périphériques arrondies du treillis 3 sont au moins légèrement aplaties par l'effort de serrage T. On peut bien entendu fabriquer de même des panneaux P comportant plusieurs couches superposées et alternées de tôle 1 et de treillis 3.

Du même, pour assurer la métallisation de la surface du treillis 3, on peut remplacer le bain B par une pulvérisation du produit de soudure liquide. Le treillis 3 peut comporter une métallisation seulement dans certaines zones où l'on désire le souder à la tôle 1, les autres zones n'assurant qu'un contact entre le treillis et la tôle, par exemple à des fins d'amortissement des vibrations et du bruit sur le panneau P. On doit comprendre également qu'il est possible de prévoir pour la tôle 1 our 2 (par exemple revêtue d'aluminium) une température $T_1$ supérieure à la température $T_2$ du treillis (par exemple revêtue de zinc), de telle façon que la chaleur de la tôle et de son revêtement provoque la fusion du revêtement du treillis et la soudure entre le revêtement de la tôle et celui du treillis.

**Revendications**

1. Panneau composé (P) constitué d'au moins une tôle (1) métallisée sur au moins une face par un métal ou alliage métallique de revêtement (1a) différent de celui de la tôle et soudée sur une face à un treillis métallique (3) métallisé et soudé par son revêtement de métallisation (3a) au revêtement en métal ou alliage métallique (1a) de la face metallisée de la tôle (1), caractérisé en ce que l'un des éléments, tôle (1) ou treillis (3), constituant le panneau (P) est métallisé au zinc ou ses alliages tandis que l'autre est métallisé à l'aluminium ou ses alliages.

2. Panneau composé selon la revendication 1, caractérisé en ce que la tôle (1) est métallisée (en 1a) au zinc ou ses alliages tandis que le treillis (3) est métallisé (en 3a) à l'aluminium ou ses alliages, au moins sur sa couche extérieure.

3. Panneau composé selon la revendication 1 ou 2, caractérisé en ce qu'il est constitué de deux tôles (1, 2) métallisées au zinc ou ses alliages sur toute la surface en regard du treillis et emprisonnant entre elles le treillis (3) métallisé à l'aluminium ou ses alliages sur toute sa surface pour constituer un panneau sandwich (P).

4. Procédé de fabrication d'un panneau composé (P) constitué d'au moins une tôle (1) métallisée sur au moins une face par un métal ou alliage métallique de revêtement (1a) et soudée sur une face à un treillis (3) qui est métallisé et soudé par son revêtement de métallisation (3a) au revêtement (1a) en métal ou alliage métallique de la face métallisée de la tôle (1), l'un des éléments tôle (1) ou treillis (3) constituant le panneau (P) étant métallisé au zinc ou à ses alliages tandis que l'autre est métallisé à l'aluminium où à ses alliages selon l'une des revendications 1 à 3, procédé dans lequel au moins une bande ou plaque de tôle (1, 2) métallisée sur au moins une face et une bande ou plaque de treillis (3) préalablement revêtue d'un matériau apte à la soudure sont chaffés et ensuite l'ensemble formé de la tôle et du treillis superposés par leurs faces métallisées en contact sont comprimés pour réaliser une soudure par pression de la tôle et du treillis, caractérisé en ce qu'avant compression dudit ensemble, la bande ou plaque de tôle (1, 2) est portée à une première température $(T_1)$ inférieure à la température de fusion ou de dégradation de son revêtement de métallisation, tandis que le treillis (3) en bande ou en plaque préalablement revêtu d'un matériau apte à la soudure est porté à une deuxième température déterminée $(T_2)$ maintenant ce matériau apte à la soudure à l'état liquide, de façon à assurer au cours de la compression de l'emsemble constitué par la tôle appliquée par sa face métallisée sur le treillis, la soudure du treillis (3) à la tôle (1, 2) par diffusion du revêtement du treillis dans le revêtement de la tôle et par absorption par la tôle (1, 2) et son revêtement de métallisation (1a) de l'énergie thermique de solidification du revêtement liquide (3a) de treillis (3) et en ce que l'on refroidit l'ensemble de la tôle (1) et du treillis (3) immédiatement après la phase de compression jusqu'à une troisième température $(T_3)$ pour laquelle la soudure est durcie.

5. Procédé selon la revendication 4, caractérisé en ce que l'on utilise une tôle (1) métallisée au zinc ou ses alliages, de préférence par électrozingage, tandis que l'on utilise pour le treillis (3) un matériau métallique de soudure (3a) en aluminium ou alliage d'aluminium.

6. Procédé selon l'une des revendications 4 ou 5, caractérisé en ce que l'on utilise un treillis (3) qui a été préalablement métallisé avant l'accrochage du matériau de soudure liquide sur ce treillis.

7. Procédé selon l'une des revendications 4 à 6, caractérisé en ce que l'on utilise un treillis (3) préalablement métallisé par un métal convenable autre que le matériau de la soudure.

8. Procédé pour la réalisation d'un panneau selon l'une des revendications 4 à 7, caractérisé en ce que l'on place au contact de la face métallisée d'au moins une plaque de tôle (1, 2) préalablement chauffée à la première température $(T_1)$, une plaque de treillis (3) préalablement trempée dans un bain (B) de matériau liquide apte à la soudure tel qu'un métal ou alliage métallique porté à la deuxième température déterminée $(T_2)$, de manière à charger ce treillis (3) de matériau métallique de revêtement et à le chauffer à une température de soudure et en ce que l'on comprime ensuite par compression à plat, par exemple au moyen d'une presse, l'ensemble ainsi formé, de façon à assurer la soudure du treillis (3) à la tôle (1).

9. Procédé selon l'une des revendications 4 à 7, caractérisé en ce qu'on amène sous atmosphère inerte au contact d'au moins une bande ou plaque de tôle métallisée (1, 2), préalablement chauffée à la première température $(T_1)$, le treillis (3) préalablement trempé dans un bain (B) du matériau liquide apte à la soudure et porté à la deuxième température déterminée $(T_2)$, de manière à charger ce treillis (3) de matériau métallique de revêtement et à le chauffer à une température de soudure et en cen qu'on comprime ensuite l'ensemble ainsi formé.

10. Procédé selon la revendication 9, caractérisé en ce qu'on élimine par soufflage de gaz inerte, tel que de l'azote, le matériau apte à la soudure restant liquide et en excès sur le treillis (3) sortant du bain (B), tout en maintenant à l'état liquide le revêtement résiduel treillis (3) en matériau apte à la soudure.

11. Procédé selon l'une des revendications 4 à 10, caractérisé en ce que les bandes de tôles (1, 2) reçoivent préalablement un traitement de surface ménageant l'intégrité de leur revêtement de métallisation (1a).

12. Procédé selon l'une des revendications 9 à 11, caractérisé en ce que le treillis (3) reçoit, avant de passer dans le bain (B) de matériau liquide apte à la soudure, un traitement de surface adéquat.

13. Appareil pour la mise en oeuvre du procédé de fabrication de panneaux renforcés selon l'une des revendications 4 à 7 et 9 à 12, et comprenant au moins une bobine $(B_1)$ délivrant une bande de tôle métallisée (1, 2) et une paire de cylindres de colaminage ou de calendrage ou de serrage $(C_1$ et $C_2)$ entre lesquels est engagée la bande de tôle (1, 2) associée à un treillis, caractérisé en ce qu'il comporte des moyens de traitement de surface (P) de la tôle (1, 2) et de chauffage $(R_1)$ à la première température $(T_1)$ de la bande quittant la bobine, l'appareil comprenant en outre une débobineuse de treillis où celui-ci est guidé par des rouleaux $(G_1$ et $G_2)$ pour plonger dans un bain (B) de matériau liquide apte à la soudure tel qu'un métal ou un alliage métallique, maintenu à la deuxième température déterminée $(T_2)$ et est engagé à sa sortie du bain au contact de la bande de tôle dans les cylindres $(C_1$ et $C_2)$ pour en sortir selon un trajet vertical ascendant et en ce qu'il comporte un organe refroidisseur rapide (18, 19) apte à refroidir, immédiatement après sa sortie des cylindres $(C_1, C_2)$ jusqu'à une troisième température $(T_3)$ pour laquelle la soudure est durcie, le panneau (P) formé par compression et soudure du treillis (3) au contact de la tôle (1, 2).

14. Appareil selon la revendication 13, caractérisé en ce que l'organe refroidisseur rapide est constitué par des buses (18, 19) de soufflage d'air frais en direction de l'intervalle (4) entre les

cylindres (C$_1$, C$_2$) et de chaque côté du panneau renforcé (P) sortant de l'intervalle entre ces cylindres.

15. Appareil selon l'une des revendications 13 à 14, caractérisé en ce que le treillis (3) est entouré, entre sa sortie du bain (B) et son entrée dans les cylindres (C$_1$, C$_2$), par un manchon (M) dans lequel règne une atmosphère gazeuse inerte et où agissent des moyens de soufflage (13, 14) et des moyens de maintien en température (17).

**Patentansprüche**

1. Verbundplatte (P), bestehend aus mindestens einem Blech (1), das auf mindestens einer Seite mit einem Überzug (1a) aus einem anderen Metall oder einer anderen Metalllegierung metallisiert ist und auf einer Seite mit einem metallisierten Metallgitter (3) verschweisst ist, das mit seinem Metallisierungsüberzug (3a) mit dem Überzug (1a) aus Metall oder einer Metallegierung der metallisierten Seite des des Bleches (1) verschweisst ist, dadurch gekennzeichnet, dass eines der die Verbundplatte (P) bildenden Elemente, Blech (1) oder Gitter (3) mit Zink oder dessen Legierungen metallisiert ist wogegen das andere mit Aluminium oder seinen Legierungen metallisiert ist.

2. Verbundplatte nach Anspruch 1, dadurch gekennzeichnet, dass das Blech (1) (bei 1a) mit Zink oder dessen Legierungen metallisiert ist wogegen das Gitter (3) (bei 3a) mit Aluminium oder dessen Legierungen zumindest auf seiner äusseren Schicht metallisiert ist.

3. Verbundplatte nach Anspruch 1 oder 2, dadurch gekennzeichnet, dass sie aus zwei mit Zink oder seinen Legierungen auf ihrer ganzen dem Gitter zugewandten Seite metallisierten Blechen (1, 2) besteht, die das mit Aluminium oder seinen Legierungen auf seiner ganzen Oberfläche metallisierte Gitter (3) zwischen einander einschliessen, und so eine Sandwichplatte (P) bilden.

4. Verfahren zur Herstellung einer Verbundplatte (P), die aus mindestens einem Blech (1) besteht, dass auf mindestens einer Seite mit einem Überzug (1a) aus einem Metall oder einer metalllegierung metallisiert ist und auf einer Seite mit einem metallisierten metallgitter (3) verschweisst ist, das mit seinem Metallisierungsüberzug (3a) mit dem Überzug (1a) aus Metall oder einer Metalllegierung der metallisierten Seite des Bleches (1) verschweisst ist, wobei eines der die Verbundplatte (P) bildenden Elemente, Blech (1) oder Gitter (3) mit Zink oder seinen Legierungen metallisiert ist, wogegen das andere mit Aluminium oder seinen Legierungen metallisiert ist, nach einem der Ansprüche 1 bis 3, Verfahren in dem wenigstens eine(e) auf mindestens einer Seite metallisierter Blechstreifen oder Blechplatte (1, 2) und eine(e) vorher mit einem Schweissbahnmaterial überzogenen Gitterstreifen oder Gitterplatte erhitzt werden und sodann die aus dem mit ihren sich berührenden metallisierten Seiten von Blech und Gitter gebildete Einheit zusammengepresst wird, um eine Pressschweissung zwischen Blech und Gitter zu bewirken, dadurch gekennzeichnet, dass vor dem Zusammenpressen dieser Einheit der Blechstreifen oder die Blechplatte (1, 2) auf eine erste, unter der Schweisstemperatur oder Zerstörungstemperatur des Mettalisierungsüberzuges liegende Temperatur (T$_1$) gebracht wird, wogegen der (die) zuvor mit einem schweissbaren Material überzogenen Gitterstreifen oder Gitterplatte (3) auf eine zweite vorbestimmte Temperatur (T$_2$) gebracht wird, bei der das Material im flüssigen Zustand schweissbar ist, dass während des Zusammenpressens der aus dem mit seiner metallisierten Seite an dem Gitter (3) anliegenden Blech (1, 2) bestehenden Einheit, deren Verschweissung durch Eindiffundieren des Überzugsmateriales des Gitters (3) in den Überzug des Bleches (1, 2) und durch Absorption der Erstarrungswärme des flüssigens Überzuges (3a) des Gitters (3) durch das Blech (1, 2) und dessen Metallisierungsüberzug (1a) sichergestellt ist, und dadurch, dass die aus dem Blech (1) und dem Gitter (3) gebildete Einheit unmittelbar nach dem Zusammenpressen auf eine dritte Temperatur (T$_3$) abgekühlt wird, bei der die Schweissung aushärtet.

5. Verfahren nach Anspruch 4, dadurch gekennzeichnet, dass ein mit Zink oder dessen Legierungen, vorzugsweise durch galvanische Verzinkung, metallisiertes Blech (1) verwendent wird, wogegen für das Gitter (3) ein metallisches Schweissmaterial (3a) aus Aluminium oder einer Aluminiumlegierung verwendet wird.

6. Verfahren nach einem der Ansprüche 4 oder 5, dadurch gekennzeichnet, dass ein Gitter (3) verwendet wird, das vor dem Auftragen des flüssigen Schweissmaterials auf dieses Gitter metallisiert wurde.

7. Verfahren nach einem der Ansprüche 4 bis 6, dadurch gekennzeichnet, dass ein vorher mit einem geeigneten anderen Material als das Schweissmaterial metallisiertes Gitter (3) verwendet wird.

8. Verfahren zur Herstellung einer Platte nach einem der Ansprüche 4 bis 7, dadurch gekennzeichnet, dass mit der metallisierten Seite mindestens eines vorher auf eine erste Temperatur (T$_1$) erhitzten Bleches (1, 2) eine vorher in ein Bad (B) aus flüssigem schweissbaren Material, etwa ein auf die zweite bestimmte Temperatur (T$_2$) gebrachtes Metall oder Metalllegierung, eingetauchtes Gitter in Verbindung gebracht wird, sodass dieses Gitter (3) mit metallischem Überzugsmaterial beladen und auf Schweisstemperatur erhitzt wird, und dass man daraufhin die so gebildete Einheit flach zusammenpresst, beispielsweise mittels einer Presse, um so die Verschweissung von Gitter (3) und Blech (1) sicherzustellen.

9. Verfahren nach einem der Ansprüche 4 bis 7, dadurch gekennzeichnet, dass mindestens ein(e) vorher auf eine erste Temperatur (T$_1$) erhitzte metallisierte(r) Blechstreifen oder Blechplatte (1, 2) mit einem zuvor in ein aus schweissbarem flüssigen Material bestehendes und auf eine zweite bestimmte Temperatur (T$_2$) gebrachtes

Bad (B) eingetauchtes Gitter (3) unter Schutzgasatmosphäre in Berührung gebracht wird, sodass das Gitter (3) mit metallischem Überzugsmaterial beladen und auf Schweisstemperatur gebracht wird und dadurch, dass daraufhin die so gebildete Einheit zusammengepresst wird.

10. Verfahren nach Anspruch 9, dadurch gekennzeichnet, dass das flüssig und im Überschuss auf dem aus dem Bad (B) kommenden Gitter (3) zurückbleibende Schweissmaterial durch Abblasen mit Inertgas, z.B. Stickstoff, entfernt wird, wobei jedoch der auf dem Gitter (3) zurückbleibende Überzug aus schweissbarem Material flüssig bleibt.

11. Verfahren nach einem der Ansprüche 4 bis 10, dadurch gekennzeichnet, dass die Blechstreifen (1, 2) vorher einer Oberflächenbehandlung unterzogen werden, bei der der geschlossene Metallisierungsüberzug (1a) erhalten bleibt.

12. Verfahren nach einem der Ansprüche 9 bis 11, dadurch gekennzeichnet, dass das Gitter (3) vor dem Eintauchen in das Bad (B) aus schweissbarem flüssigen Material eine entsprechende Oberflächenbehandlung erhält.

13. Vorrichtung zur Durchführung des Verfahrens zur Herstellung von Verbundplatten nach einem der Ansprüche 4 bis 7 und 9 bis 12, der zumindest eine einen metallisierten Blechstreifen abgebende Spule (B₁) und ein Paar Zusammenwalz- oder Glätt- oder Spannzylinder ($C_1$, $C_2$) besteht, zwischen denen der mit dem Gitter verbundene Blechstreifen (1, 2) eingeschlossen ist, dadurch gekennzeichnet, dass sie über Mittel (P) zur Behandlung der Oberfläche des Bleches (1, 2) und Mittel (R₁) zur Erhitzung des die Spule verlassenden Streifens auf eine erste Temperatur (T₁) aufweist, wobei die Vorrichtung weiters eine Gitterabspulvorrichtung umfasst, in der dieses von Walzen ($G_1$, $G_2$) so geführt wird, dass es in ein Bad (B) aus schweissbarem flüssigen Material, etwa einem Metall oder einer Metalllegier, die auf einer zweiten bestimmten Temperatur (T₂) gehalten wird, eintaucht und das Gitter beim Verlassen des Bades in den Zylindern ($C_1$, $C_2$) mit den Blechstreifen in Berührung gebracht wird und diese in vertikal aufsteigender Richtung verlässt, und dadurch, dass die Vorrichtung über eine Schnellkühleinrichtung (18, 19) verfügt, die geeignet ist, die durch Zusammenpressen und Zusammenschweissen von Gitter (3) und Blech (1, 2) gebildete Platte unmittelbar nach dem Verlassen der Zylinder ($C_1$, $C_2$) bis auf eine dritte Temperatur (T₃) abzukühlen, bei der die Schweissung erhärtet ist.

14. Vorrichtung nach Anspruch 13, dadurch gekennzeichnet, dass die Schnellkühleinrichtung aus Düsen (18, 19) zum Ausblasen kühler Luft in Richtung auf den Zwischenraum (4) zwischen den Zylindern ($C_1$, $C_2$) und beiden Seiten der aus dem Zwischenraum zwischen den Zylindern austretenden Verbundplatte besteht.

15. Vorrichtungen nach einem der Ansprüche 13 bis 14, dadurch gekennzeichnet, dass das Gitter (3) zwischen seinem Austritt aus dem Bad (B) und seinem Eintritt in die Zylinder ($C_1$, $C_2$) von einer Hülle (M) umgeben ist, in der eine Schutzgasatmosphäre oder eine Atmosphäre herscht, in der die Blaseinrichtungen (13, 14) und die Temperaturaufrechtserhaltungseinrichtungen (17) wirken.

**Claims**

1. Reinforced panel (P) constituted by at least one sheet (1) metallized on at least one side thereof with a metal or metallic alloy covering (1a) differing from that of the sheet and welded on one side to a metallic mesh (3) metallized and welded by its metallization covering (3a) to the metal or metallic alloy covering (1a) of the metallized side of the sheet, characterized in that one of the elements, sheet (1) or mesh (3), of the panel (P) is metallized with zinc or its alloys while the other is metallized with aluminum or its alloys.

2. Reinforced panel according to claim 1, characterized in that the sheet is metallized (at 1a) with zinc or its alloys while the mesh (3) is metallized (at 3a) with aluminium or its alloys, at least on its outermost layer.

3. Reinforced panel according to claim 1 or 2, characterized in that it is constituted by two sheets (1, 2) metallized with zinc or its alloys on their entire surface facing the mesh and confining between them the mesh (3) metallized with aluminum or its alloys on its entire surface, to constitute a sandwich panel (P).

4. Process for the manufacture of a reinforced panel (P) comprising at least one sheet (1) metallized on at least one side with a metal or metallic alloy covering (1a) and welded on one side to a mesh (3) metallized and welded by its metallization covering (3a) to the metal or metallic alloy covering (1a) of the metallized side of the sheet (1), one of the elements, sheet (1) or mesh (3), of which the panel (P) consists being metallised with zinc or its alloys whereas the other is metallized with aluminum or its alloys according to one of claims 1, 2, 3 process in which at least one strip or plate of sheet (1, 2) metallized on at least one side and a strip or plate of mesh (3) previously covered with a weldable material are heated and the assembly consisting of sheet and mesh, superposed with their metallized sides being in contact, are compressed in order to pressure weld the sheet and mesh together, characterized in that before compressing this assembly, the strip or plate of sheet (1, 2) is heated to a first temperature (T₁) lower than the temperature of melting or of deterioration of the metallization coating, whereas the strip or sheet of mesh (3) previously covered with a weldabe material is brought to a second predetermined temperature (T₂) keeping the weldable material in a liquid state, in order to ensure welding the mesh (3) to the sheet (1, 2) during compression of the assembly consisting of the mesh and the sheet pressed on the mesh with its metallized side, by diffusion of the covering of the mesh into the covering of the sheet and by absorption by the sheet (1, 2) and its metallization covering (1a) of the solidification heat of the liquid covering (3a) of mesh (3) and in that the assembly of sheet (1) and mesh (3) is cooled to a third temperature ($T_3$), at which the weld hardens, immediately after compression.

5. Process according to claim 4, characterized in that a sheet (1) metallized with zinc or its alloys, preferably by electroplating, is utilized, whereas an aluminum or an aluminum alloy metallic welding material (3a) is used for the mesh (3).

6. Process according to one of claims 4 or 5, charcterized in that a mesh (3) is utilized which has previously been metallized before establishing adhesion of the liquid welding material to this mesh.

7. Process according to one of claims 4 to 6, characterized in that the mesh (3) utilized is previously metallised with a suitable metal other than that of the liquid welding material.

8. Process for making a panel according to one of claims 4 to 7, characterized in that the metallized side of at least one of the sheets (1, 2), previously heated to first temperature ($T_1$), and a plate of mesh having been immersed previously in a bath (B) of liquid weldable material such as a metal or a metallic alloy brought to second determined temperature ($T_2$) in order to load the mesh (3) with metallic covering material, and heat it to a welding temperature and in that the thus formed assembly is then compressed by flat compression, using a press for example, in order to ensure uniting of mesh (3) and sheet (1) by welding.

9. Process according to one of claims 4 to 7, characterized in that the mesh (3) which has previously been immersed in a bath (B) of weldable liquid material brought to a second predetermined temperature ($T_2$) is brought into contact in an inert gas atmosphere with at least one strip or plate of metallized sheet (1, 2) previously heated to the first temperature ($T_1$), whereby the mesh (3) is covered with metallic covering material and heated to a welding temperature and in that the resulting assembly is then compressed.

10. Process according to claim 9, characterized in that excess remaining liquid weldable material on the mesh (3) leaving the bath (B) is eliminated by blowing in an inert gas, such as nitrogen, whilst maintaining the residual coating of weldable material on the mesh (3) in a liquid state.

11. Process according to one of claims 4 to 10, characterized in that the strips of sheet (1, 2) are previously subject to a surface treatment which does not harm the integrity of their metallization covering (1a).

12. Process according to one of claims 9 to 11, characterized in that the mesh (3) is subject to a suitable surface treatment before entering the bath (B) of weldable liquid material.

13. Apparatus for carrying out the process for the manufacture of a reinforced panel according to one of claims 4 to 12, comprising at least one reel ($B_1$) from which a strip of metallized sheet (1, 2) is wound and a pair of compression, rolling or calendaring cylinders ($C_1$ and $C_2$) between which the strip of sheet (1, 2) is introduced in association with a mesh, characterized in that it includes means for surface treatment (P) of the sheet (1, 2) leaving the reel and for heating ($R_1$) it to the first temperature ($T_1$), the apparatus further including a pay-out device for said mesh which is guided by rollers ($G_1$ and $G_2$) in order to be immersed in a bath (B) of liquid weldable material such as a metal or a metallic alloy maintained at the second predetermined temperature ($T_2$), and upon leaving the bath and in contact with said strip of sheet is engaged by cylinders ($C_1$ and $C_2$) in order to leave said bath along a rising vertical path, and in that it includes rapid cooling means (18, 19) adapted to cool the panel (P), formed by compression and welding of the mesh (3) in contact with the sheet (1, 2), immediately after it leaves the cylinders ($C_1$, $C_2$) down to a third temperature ($T_3$) at which the weld is hardened.

14. Apparatus according to claim 13, characterized in that the rapid cooling means are constituted by nozzles (18, 19) for blowing fresh air towards the gap or interval (4) between the cylinders ($C_1$, $C_2$) and from each side of the reinforced panel (P) issuing from the gap between the said cylinders.

15. Apparatus according to claims 13 to 14, characterized in that between leaving the bath (B) and entering the cylinders ($C_1$, $C_2$), the mesh (3) is surrounded by a sleeve (M) in which an inert gaseous atmosphere prevails and in which blowing means (13, 14) and temperature-maintaining means (17) operate.

# FIG.1

# FIG.2

FIG.3

FIG.4